# FASCICULE DE BREVET EUROPEEN

(11) **EP 0 457 700 B1**
(45) Date de publication et mention de la délivrance du brevet: **11.08.1993**
(21) Numéro de dépôt: 91420162.9
(22) Date de dépôt: 17.05.1991
(51) Int. Cl.: F16L 37/28

(54) **Dispositif d'accouplement à boisseaux tournants pour tuyauteries**
Kupplungsvorrichtung mit drehbaren Küken für Rohrleitungen
Pipe line coupling device with rotating cocks

(30) Priorité: 18.05.1990 FR 9006498
(43) Date de publication de la demande: 21.11.1991
(73) Titulaire: S.A. DES ETABLISSEMENTS STAUBLI (France), 74210 Faverges (FR)
(72) Inventeur: Truchet, Gaston, F-74210 Faverges (FR)
(74) Mandataire: Monnier, Guy

(56) Documents cités:
- DE-C- 737 545
- US-A- 2 991 090
- US-A- 3 159 180

## Description

La présente invention a trait aux raccords pour tuyauteries et elle vise plus particulièrement les dispositifs d'accouplement dans lesquels chacun des deux éléments fixés aux extrémités des tuyauteries à réunir est équipé d'un clapet constitué par un boisseau substantiellement sphérique propre à tourner sur lui-même pour passer de la position d'ouverture à la position de fermeture et vice versa, ce mouvement s'effectuant de manière automatique moyennant déplacement axial de l'un desdits éléments par rapport à l'autre.

La construction d'un tel dispositif reste relativement simple lorsque les deux boisseaux sont disposés à un certain écartement l'un de l'autre et peuvent de ce fait être commandés simultanément en rotation. Il n'en va pas de même par contre lorsqu'on désire éviter tout risque de mise en contact du liquide véhiculé avec l'ambiance extérieure par suite des risques de pollution qui seraient autrement engendrés ; en pareil cas, il est nécessaire qu'à la position accouplée des éléments, la protubérance semi-sphérique du boisseau de l'un de ceux-ci vienne se loger dans une dépression conjuguée ménagée dans la paroi de l'autre, et l'on comprend que l'interpénétration des deux parties à profil semi-sphérique s'oppose normalement à tout mouvement de rotation simultané des deux boisseaux ainsi emboîtés.

Pour résoudre le problème ainsi posé, on prévoit généralement que la rotation des boisseaux au cours du mouvement longitudinal d'accouplement soit précédée par un déplacement axial ou recul de l'un au moins des deux à l'intérieur du corps qui le renferme. On comprend que si ce recul préalable permet bien ensuite la rotation simultanée des deux boisseaux du dispositif, il provoque le contact du liquide avec certaines des pièces de celui-ci, en impliquant de la sorte des opérations de nettoyage relativement compliquées si l'on entend éviter tout risque de pollution interne. Il convient en outre d'observer que les structures proposées sont complexes et renchérissent le coût de l'ensemble.

Le document US-A-3 159 180 (COURTOT) illustre une solution qui a été proposée pour surmonter cet inconvénient, en évitant tout recul préalable de l'un des boisseaux. Il s'agit d'un raccord rapide du type dans lequel l'assemblage des deux éléments du dispositif est assuré par la rotation d'une pièce tournante de l'un par rapport à une pièce conjuguée de l'autre. Chaque boisseau est angulairement solidaire d'un disque qui est échancré radialement de façon à ce que lors de l'assemblage des deux éléments par rotation, un doigt prévu radialement sur l'élément opposé vienne entraîner angulairement ledit disque et son boisseau. Bien entendu les choses sont agencées de manière telle que les deux boisseaux tournent l'un après l'autre et que les deux éléments du raccord ne puissent être dissociés avant que lesdits boisseaux aient été amenés en position de fermeture.

Cet agencement connu, satisfaisant pour les raccords rapides à assemblage par rotation, ne peut évidemment convenir pour les dispositifs d'accouplement dans lesquels l'assemblage des deux éléments implique le déplacement axial de l'un de ceux-ci par rapport à l'autre, et c'est à cette lacune qu'entend remédier la présente invention.

Cette dernière a pour objet le dispositif d'accouplement qui est défini à la revendication 1.

Le dessin annexé, donné à titre d'exemple, permettra de mieux comprendre l'invention, les caractéristiques qu'elle présente et les avantages qu'elle est susceptible de procurer :

Fig. 1 et 2 montrent les deux éléments d'un dispositif d'accouplement établi suivant l'invention.

Fig. 3 et 4 sont des coupes axiales suivant les plans respectivement indiqués en III-III sur fig. 1 et IV-IV sur fig. 2.

Fig. 5 représente les deux éléments emmanchés l'un dans l'autre à la position verrouillée.

Fig. 6 est la coupe axiale suivant le plan indiqué en VI-VI sur fig. 5.

Fig. 7 et 8 reproduisent fig. 5 à deux phases successives du processus d'ouverture des boisseaux.

Fig. 9 et 10 sont des coupes axiales de détail respectivement suivant les plan indiqués en IX-IX (fig. 7) et X-X (fig. 8).

Fig. 11 illustre une variante de mise en oeuvre de l'invention.

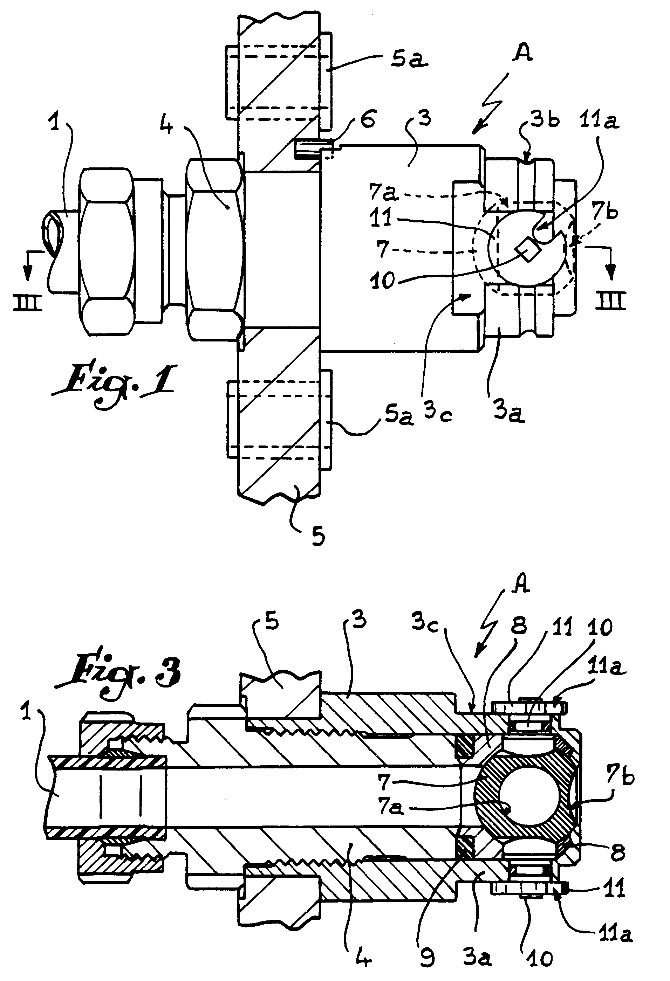

A la façon usuelle, le dispositif d'accouplement comprend deux éléments A (fig. 1) et B (fig. 2) dont le corps est agencé à la partie arrière pour être fixé à l'extrémité des deux tuyauteries flexibles 1 et 2 à accoupler.

Le corps de l'élément A (fig. 1 et 3) est formé par deux pièces tubulaires 3 et 4 prévues filetées pour s'assembler l'une à l'autre par vissage en serrant entre elles une plaque-support 5 équipée de bagues de guidage 5a. On notera que la pièce 3 comporte un index 6 engagé dans une cavité correspondante de la plaque 5 en vue d'assurer le répérage angulaire du corps 3-4 par rapport à ladite plaque.

A l'opposé de la tuyauterie 1, le corps 3-4 renferme un boisseau tournant 7 monté entre deux sièges 8 associés à un joint de compensation 9. En deux points diamétralement opposés, ce boisseau 7 comporte une empreinte dans laquelle est logée l'extrémité en forme de tournevis d'un petit arbre transversal 10 monté de manière étanche dans un perçage correspondant de l'extrémité de la pièce 3. Chaque arbre 10 est doté d'un disque de commande 11 découpé d'une entaille 11a. Bien évidemment, le boisseau 7 est traversé par un perçage débouchant 7a, tandis que sa paroi extérieure présente une dépression 7b en forme de cuvette semi-sphérique dont le rayon est égal au rayon extérieur du boisseau.

Il convient d'observer que le boisseau 7 est logé dans une partie ou nez 3a à plus petit diamètre de la pièce 3 du corps 3-4, lequel nez est creusé d'une gorge annulaire 3b. Les disques 11 se trouvent placés au niveau de deux méplats 3c diamétralement opposés l'un à l'autre sur le nez 3a, de sorte qu'ils ne déterminent aucune saillie sur ce dernier.

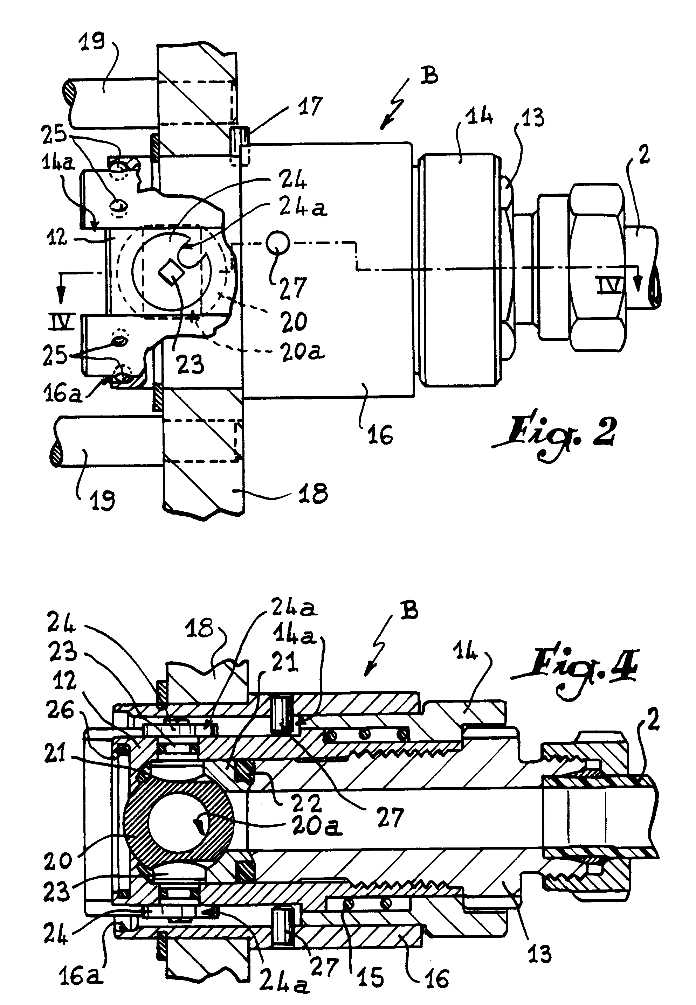

Le corps de l'élément B (fig. 2 et 4) présente une structure plus complexe. En effet, si l'on retrouve bien deux pièces tubulaires 12 et 13 assemblées par vissage, la pièce 12 est entourée par une bague mobile 14 qu'un ressort 15 tend à repousser vers l'arrière jusqu'à venir en butée contre un épaulement annulaire de la pièce 13. La bague 14 est elle-même disposée à l'intérieur d'une douille 16 fixée, avec interposition d'un index de repérage 17 analogue à celui 6 de l'élément A, à une plaque-support 18 pourvue de deux tiges parallèles 19 aptes à coulisser à l'intérieur des guides 5a de la plaque 5.

Le corps 13-14 de l'élément B renferme un boisseau tournant 20 percé en 20a comme le boisseau 7 et monté, comme ce dernier, entre deux sièges 21 associés à un joint de compensation 22. Il est également pourvu de deux arbres 23 équipés de disques de commande 24 découpés d'une entaille 24a. Ces deux disques 24 se trouvent disposés à l'intérieur de parties entaillées 14a de la bague 14, laquelle dépasse en avant de la douille 16 et comporte des perforations propres à former logements pour des billes 25, retenues entre la douille 16 et la paroi extérieure de la pièce tubulaire 12.

Immédiatement en avant du boisseau 20, cette pièce 12 est équipée d'un joint torique 26. Par ailleurs, en arrière de la plaque 18, la douille 16 porte deux doigts 27, diamétralement opposés l'un à l'autre et qui font saillie radialement à l'intérieur des parties entaillées de la bague 14.

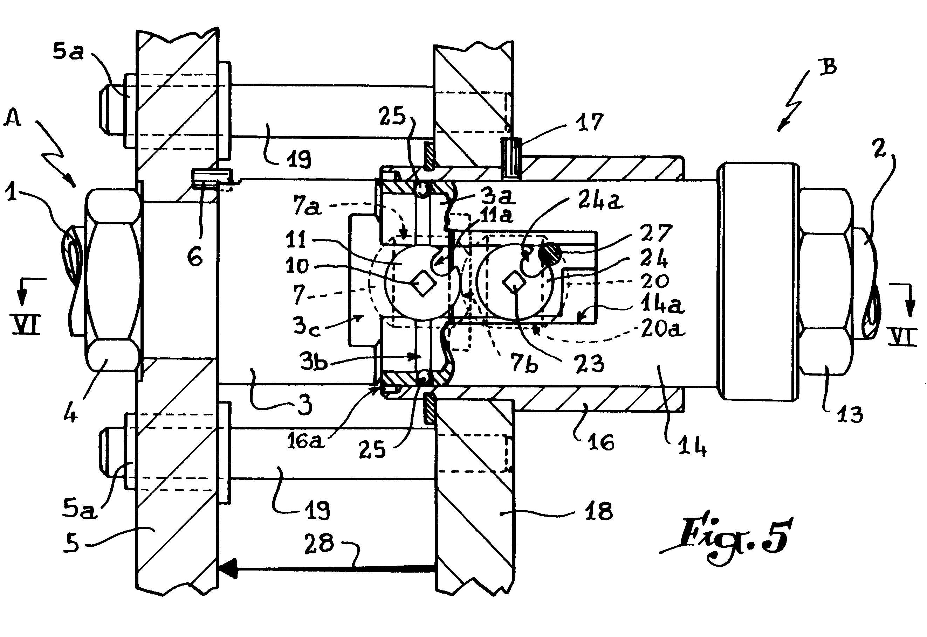

Avant d'exposer le fonctionnement du dispositif d'accouplement ci-dessus décrit, on indiquera qu'aux deux plaques-supports 5 et 18 est associé un vérin à actionnement pneumatique, hydraulique ou électrique, dont les deux organes (corps et piston) sont respectivement fixés aux-dites plaques en vue d'opérer leur rapprochement ou leur écartement mutuel. Afin de simplifier les explications qui vont suivre, on supposera que la plaque 5 est fixe, de sorte que c'est la plaque 18 qui est déplacée transversalement à son axe par le vérin précité, schématiquement représenté en fig. 5 par la flèche 28.

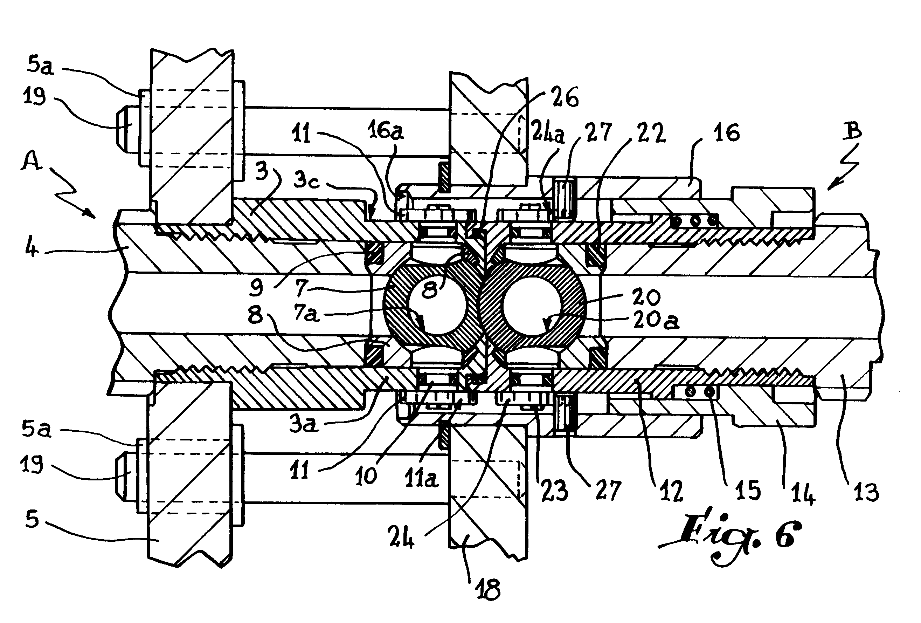

Le dispositif étant supposé à la position désaccouplée des deux éléments A et B, on comprend que lorsque le vérin 28 entame sa course de rapprochement, la bague 14 vient s'engager sur le nez 3a du corps 3-4 de l'élément A, tandis que le boisseau 20 vient s'emboîter partiellement dans l'empreinte 7b du boisseau 7. Les billes 25, qui étaient initialement disposées au niveau du débouché aminci 16a de la douille 16, sont repoussées vers l'avant par l'épaulement formé dans ce débouché en entraînant la bague 14, jusqu'à ce qu'elles se trouvent au niveau de la gorge 3b du nez 3a précité dans laquelle elles sont appliquées. Dès lors, les deux éléments A et B du dispositif sont verrouillés axialement l'un à l'autre, à la manière illustrée en fig. 5 et 6, étant observé que les deux boisseaux 7 et 20 sont toujours à la position fermée.

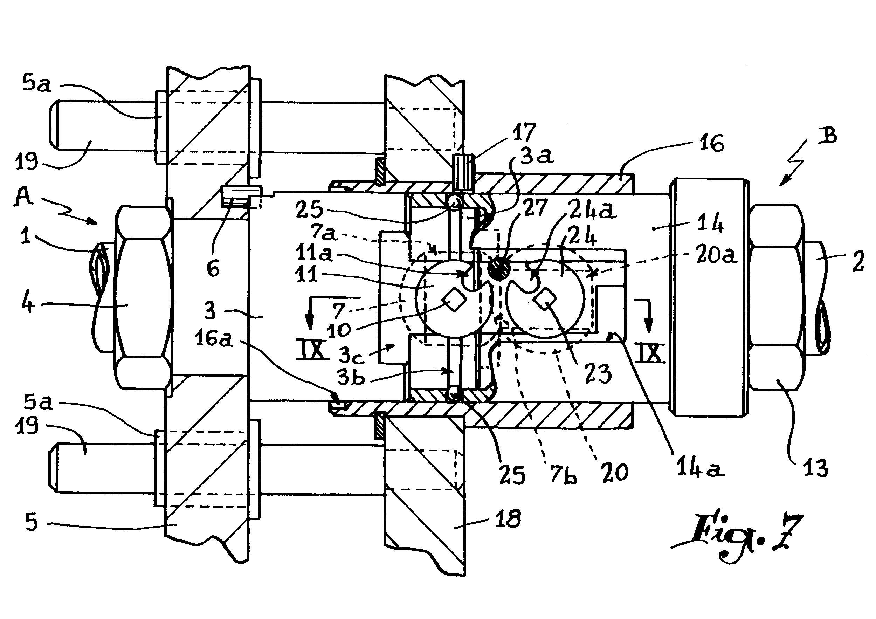

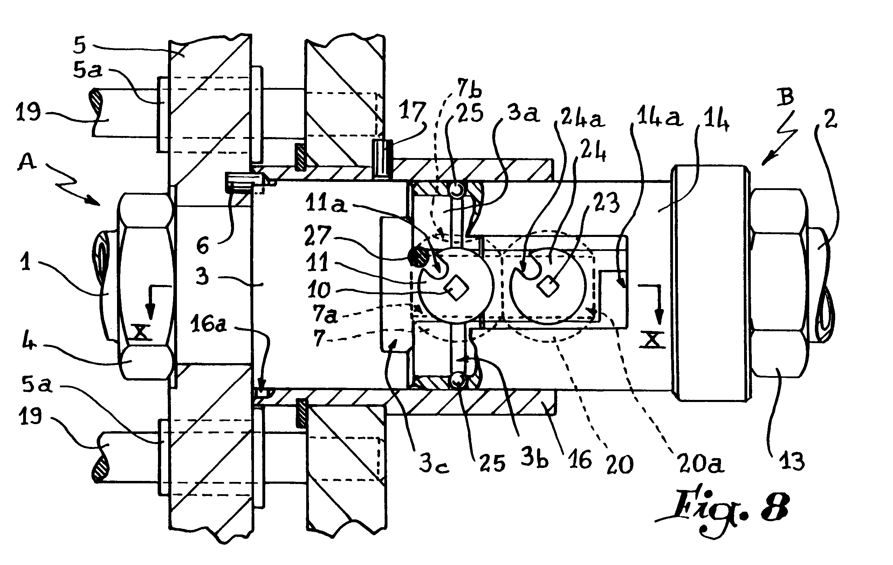

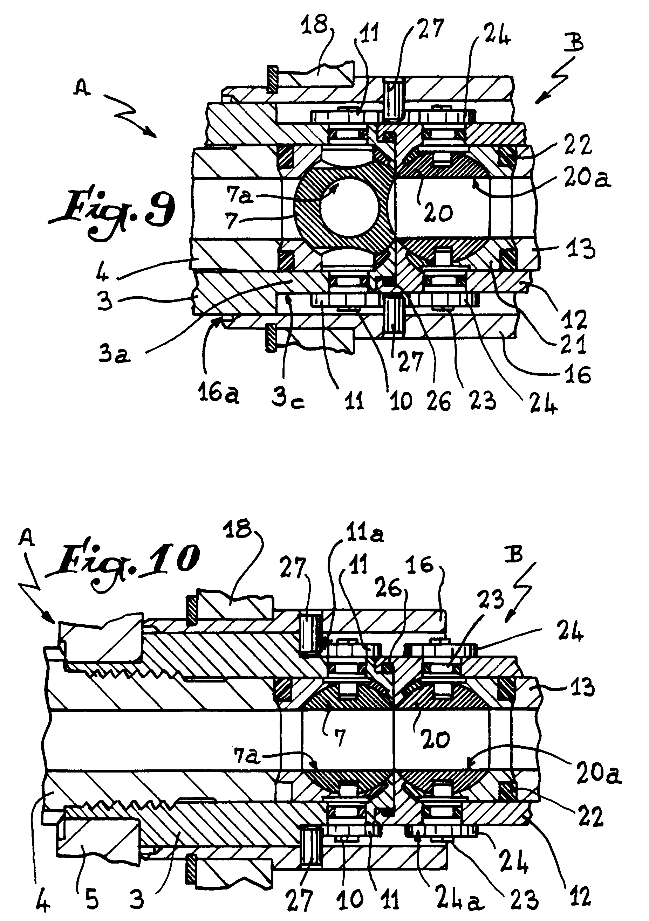

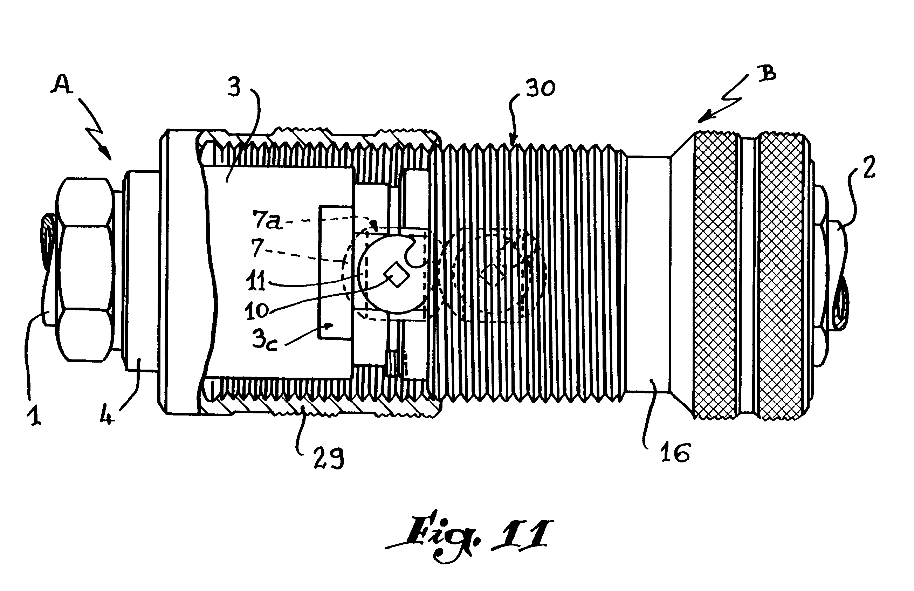

La poursuite du déplacement de la douille 16 sous l'action du vérin 28 va amener les doigts 27 à s'engager dans les entailles 24a des disques 24, puis à entraîner en rotation ces derniers. Par suite de la présence de la dépression 7b, le boisseau 20 peut tourner sur lui-même suivant un angle de 90°, en affectant finalement l'orientation d'ouverture illustrée en fig. 7 et 9. Poursuivant leur déplacement, les doigts 27 quittent les entailles 24a et s'introduisent dans les entailles 11a, de sorte qu'ils vont de la même manière assurer la commande des disques 11 associés au boisseau 7 ; la protubérance sphérique de ce boisseau 7 se trouve engagée dans le débouché du perçage 20a, de sorte que ledit boisseau 7 est libre de pivoter à son tour de 90° pour affecter la position ouverte suivant fig. 8 et 10.

Le fluide qui parcourt les deux tuyauteries 1 et 2 peut alors traverser le dispositif d'accouplement, sans perte de charge et sans venir au contact d'une pièce dudit dispositif autre que la paroi des alésages axiaux des corps 3-4 et 12-13, la paroi des sièges 8 et 21 et la paroi des perçages 7a et 20a, toutes ces parois n'ayant aucun contact avec l'ambiance extérieure et étant au surplus susceptibles d'être nettoyées moyennant un simple passage de fluide à l'intérieur du dispositif.

Il va de soi que le désaccouplement peut être obtenu en actionnant le vérin 28 à l'expansion afin d'écarter les deux plaques 5 et 18. Les doigts 27 vont successivement commander à la fermeture le boisseau 7, puis le boisseau 20 ; finalement, la douille 16 revient à sa position initiale avec son débouché aminci 16a en vis-à-vis des billes 25 qui déverrouillent les deux éléments A et B.

On comprend sans peine que l'invention est susceptible d'être avantageusement mise en oeuvre pour la réalisation de dispositifs d'accouplement à actionnement manuel. Comme illustré en fig. 11, il suffit à cet effet de faire comporter à l'élément A une bague de manoeuvre filetée 29 tournant sur la périphérie de la pièce 3 du corps 3-4, laquelle bague 29 est propre à venir coopérer avec un filetage 30 prévu sur la périphérie de la douille 16 en assurant le déplacement réciproque des deux éléments, dans une direction ou dans l'autre suivant le sens du déplacement angulaire imparti à ladite bague 29.

## Revendications

1. Dispositif d'accouplement pour tuyauteries comprenant en combinaison :
- deux éléments emmanchables (A et B) qui sont équipés de moyens (14-25) propres à assurer leur verrouillage et leur déverrouillage lors du mouvement axial impliqué par leur accouplement et leur désaccouplement ;
- un boisseau tournant (7, 20) monté à l'intérieur de chacun des éléments (A, B) précités, l'un (7) desdits boisseaux présentant une dépression semi-sphérique (7a) à l'intérieur de laquelle vient s'emboîter la paroi de l'autre (20) lorsque les deux boisseaux sont en position fermée ;
- au moins un disque de commande (11, 24) qui est solidaire en rotation de chaque boisseau (7, 20) et qui est découpé d'une entaille (11a, 24a) ;
- une douille (16) solidaire de l'un (B) des deux éléments (A, B) de façon à se déplacer axialement avec ledit élément (B) lors de l'accouplement et du désaccouplement desdits éléments ;
- et au moins un doigt d'actionnement (27) fixé radialement sur ladite douille (16) de façon à ce que lors du déplacement axial de celle-ci, ce même doigt, en s'engageant successivement dans l'entaille (24a, 11a) de chaque disque de commande (24, 11) qui est ainsi déplacé angulairement, assure la commande séquentielle du mouvement rotatif de 90° des boisseaux (7, 20).

2. Dispositif suivant la revendication 1, dans lequel la douille (16) assure simultanément, par déplacement axial lors de l'accouplement et du déssaccouplement des deux éléments (A, B), la commande des moyens (14-25) pour le verrouillage et le déverrouillage desdits éléments.

## Patentansprüche

1. Kupplungsvorrichtung für Rohrleitungen, zusammengestellt enthaltend:
- zwei aufsteckbare Elemente (A und B), die mit Einrichtungen (14-25) ausgerüstet sind, die ihre Verriegelung und ihre Entriegelung bewirken bei der Axialbewegung, die ihre Kupplung und ihre Entkupplung voraussetzt;
- ein drehbares Küken (7, 20), angeordnet im Innern eines jeden der vorerwähnten Elemente (A,B), wobei eines der Küken eine halbkugelförmige Vertiefung (7a) aufweist, in die sich die Wandung des anderen (20) einfügt, wenn die beiden Küken sich in der geschlossenen Stellung befinden;
- wenigstens eine Steuerscheibe (11, 24), die fest auf Drehung mit jedem Küken (7, 20) verbunden ist und in eine Kerbe (11a, 24a) eingeschnitten ist;
- eine Hülse (16), die mit dem einen (B) der beiden Elemente (A, B) so verbunden ist, daß sie sich axial mit dem genannten Element (B) bewegt bei der Kupplung und der Entkupplung der genannten Elemente;
- wenigstens einen Betätigungsfinger (27), der radial an der genannten Hülse so befestigt ist, daß bei deren Axialbewegung dieser Finger die sequentielle Steuerung der Drehbewegung um 90° der beiden Küken (7, 20) gewährleistet, indem er nach und nach eindringt in die Kerbe (24a, 11a) jeder Steuerscheibe (24, 11), die infolgedessen eine Winkelbewegung ausführt.

2. Vorrichtung nach Anspruch 1, bei der die Hülse (16) bei der Axialbewegung der Kupplung und der Entkupplung der beiden Elemente (A, B) simultan die Steuerung der Einrichtungen (14-25) für die Kupplung und die Entkupplung der genannten Elemente gewährleistet.

## Claims

1. A coupling device for pipes comprising in combination:
- two interlocking elements (A and B) which are provided with means (14-25) for ensuring the locking and unlocking thereof upon the axial movement involved by the coupling and uncoupling thereof;
- a rotating cock (7, 20) mounted in the interior of each of the afore-mentioned elements (A, B), one (7) of said cocks having a hemispherical depression (7a) into which the wall of the other (20) fits when the two cocks are in the closed position;
- at least one control disc (11, 24) which is integral in rotation with each cock (7, 20) and into which a notch (11a, 24a) is cut;
- a bush (16) integral with one (B) of the two elements (A, B) so as to be displaced axially with said element (B) upon the coupling and the uncoupling of said elements;
- and at least one actuating finger (27) fixed radially to said bush (16) such that upon the axial displacement of the latter said finger, by engaging successively in the notch (24a, 11a) of each control disc (24, 11) which is thus displaced angularly, sequentially controls the 90° rotary movement of the cocks (7, 20).

2. A device according to Claim 1, in which the bush (16) simultaneously ensures, by axial displacement upon the coupling and the uncoupling of the two elements (A, B), the control of the means (14-25) for locking and unlocking said elements.
